# FASCICULE DE BREVET EUROPEEN

(11) **EP 3 273 283 B1**
(45) Date de publication et mention de la délivrance du brevet: **23.04.2025**
(21) Numéro de dépôt: 17182369.3
(22) Date de dépôt: 20.07.2017
(51) Int. Cl.: G02B 7/00, G03B 21/20, G03B 21/16, G02F 1/1335, G02F 1/1333, G02B 5/30, G02B 27/01, G02F 1/13357

(54) **DISPOSITIF DE GÉNÉRATION D'IMAGE ET AFFICHEUR TÊTE HAUTE COMPRENANT UN TEL DISPOSITIF DE GÉNÉRATION D'IMAGE**
VORRICHTUNG ZUR BILDERZEUGUNG UND HEAD-UP-DISPLAY, DAS EINE SOLCHE BILDERZEUGUNGSVORRICHTUNG UMFASST
IMAGE GENERATION DEVICE, AND HEAD-UP DISPLAY COMPRISING SUCH AN IMAGE GENERATION DEVICE

(30) Priorité: 22.07.2016 FR 1657047
(43) Date de publication de la demande: 24.01.2018
(73) Titulaire: Valeo Comfort and Driving Assistance, 94000 Créteil (FR)
(72) Inventeur: GIROD, Vincent, 94046 Créteil CEDEX (FR); GRANDCLERC, François, 94046 Créteil CEDEX (FR)
(74) Mandataire: Delplanque, Arnaud

(56) Documents cités:
- EP-A2- 0 841 685
- JP-A- S 634 217
- US-A- 5 709 463
- US-A1- 2009 168 450

## Description

### DOMAINE TECHNIQUE AUQUEL SE RAPPORTE L'INVENTION

La présente invention concerne de manière générale le domaine des afficheurs.

Elle concerne plus particulièrement un dispositif de génération d'image comprenant un écran à cristaux liquides, et une source de lumière associée optiquement à l'écran à cristaux liquides pour éclairer ledit écran, l'écran à cristaux liquides comportant un polariseur d'entrée adapté à transmettre sélectivement une composante de la lumière présentant une polarisation donnée. Elle concerne également un afficheur tête haute comprenant un tel dispositif de génération d'image.

L'invention s'applique de manière particulièrement intéressante dans un véhicule tel qu'un véhicule automobile.

### ARRIERE-PLAN TECHNOLOGIQUE

Un écran à cristaux liquides comprend généralement un polariseur d'entrée, suivi d'une matrice de cristaux liquides (ou cellule à cristaux liquides) commandée électriquement pixel par pixel, elle-même suivie d'un polariseur de sortie. La matrice de cristaux liquides est ainsi interposée entre le polariseur d'entrée et le polariseur de sortie. Ce type d'écran à cristaux liquides est l'un des plus répandus commercialement, notamment parce que la présence de ces deux polariseurs permet, lors de la fabrication, de vérifier le fonctionnement de l'écran.

Le polariseur d'entrée permet de sélectionner, dans la lumière qui éclaire l'écran à cristaux liquides, une composante présentant une polarisation donnée, rectiligne. Le polariseur d'entrée est le plus souvent un polariseur par absorption, c'est-à-dire qu'une lumière incidente sur ce filtre, et présentant une polarisation différente de celle transmise, est absorbée dans le filtre.

Dans un afficheur (par exemple un afficheur tête haute), un tel écran à cristaux liquides, associé à une source de lumière qui l'éclaire, permet de générer une image, qui est par exemple projetée ensuite au moyen d'un système optique de projection.

JPS 634 217 A, US 5,709,463 A, US 2009/168450 A1 et EP 0 841 685 A2 divulguent des dispositifs de génération d'images, ou au moins une partie, selon l'art antérieur.

Plus la puissance lumineuse émise par la source est élevée, et plus l'image générée est lumineuse.

Mais lorsque l'écran à cristaux liquides reçoit une puissance lumineuse élevée, la puissance lumineuse absorbée dans le polariseur d'entrée est également élevée, conduisant à un échauffement de l'écran qui perturbe son fonctionnement.

### OBJET DE L'INVENTION

Dans ce contexte, la présente invention propose un dispositif de génération d'image tel que défini dans la revendication 1, comprenant un polariseur supplémentaire, interposé sur le trajet de la lumière entre la source de lumière et l'écran à cristaux liquides, ce polariseur supplémentaire étant adapté à transmettre ladite composante de la lumière présentant ladite polarisation donnée et à absorber une composante de la lumière présentant une polarisation différente de ladite polarisation donnée.

La lumière incidente sur le polariseur d'entrée de l'écran à cristaux liquide présente alors ladite polarisation donnée, et est donc transmise par ce filtre sans y être absorbée, ou du moins en pratique n'y étant absorbée que de manière négligeable.

L'échauffement de l'écran à cristaux liquides sous forte illumination est alors avantageusement limité et le dispositif de génération d'image peut ainsi générer des images très lumineuses.

Autrement formulé, dans un tel dispositif de génération d'image, une composante de la lumière émise par la source, dont la polarisation ne correspondrait pas à la polarisation transmise par le polariseur d'entrée, est absorbée dans le polariseur supplémentaire, qui est un polariseur par absorption, et non dans le polariseur d'entrée de l'écran à cristaux liquides. L'échauffement causé par cette absorption est ainsi localisé au niveau du polariseur supplémentaire, et non au niveau de l'écran à cristaux liquides.

D'autres caractéristiques non limitatives et avantageuses du dispositif conforme à l'invention, prises individuellement ou selon toutes les combinaisons techniquement possibles, sont les suivantes :
- ladite polarisation donnée est une polarisation rectiligne ;
- le polariseur d'entrée est un filtre polariseur ayant un axe donné et le polariseur supplémentaire est un filtre polariseur ayant ledit axe donné ;
- l'écran à cristaux liquides comprend un polariseur de sortie et une matrice de cristaux liquides interposée entre le polariseur d'entrée et le polariseur de sortie, ce qui permet d'utiliser un écran à cristaux liquides d'un type standard, peu couteux ;

- le polariseur supplémentaire est disjoint de l'écran à cristaux liquides, grâce à quoi on limite encore plus efficacement l'échauffement de l'écran et on répartit les sources de chaleur au sein du dispositif de génération d'image ;
- le dispositif de génération d'image comprend un réflecteur disposé de manière à réfléchir vers l'écran une partie de la lumière émise par la source de lumière ;
- le polariseur supplémentaire est monté dans le réflecteur ;
- le polariseur supplémentaire est relié thermiquement audit réflecteur, et ledit réflecteur est formé d'au moins un matériau conducteur de la chaleur ;
- le polariseur supplémentaire est relié (thermiquement) à des moyens d'évacuation de chaleur ;
- lesdits moyens d'évacuation de chaleur comprennent des ailettes de refroidissement reliées au réflecteur;
- la lumière émise par la source de lumière est non-polarisée ;
- la source de lumière comprend au moins une diode électroluminescente.

L'invention propose également un afficheur tête haute pour véhicule comprenant un dispositif de génération d'image tel que mentionné ci-dessus, adapté à générer au moins une image, et un dispositif de projection adapté à renvoyer ladite image en direction d'une lame partiellement transparente.

Il particulièrement intéressant dans un tel contexte de pouvoir générer une image très lumineuse (l'environnement visuel dans lequel cette image est projetée pouvant lui aussi présenter une luminosité élevée).

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments principaux d'un afficheur tête haute destiné à équiper un véhicule ;- la figure 2 représente un premier mode de réalisation d'un dispositif de génération d'image conforme à l'invention ; et
- la figure 3 représente un deuxième mode de réalisation d'un dispositif de génération d'image non conforme à l'invention.

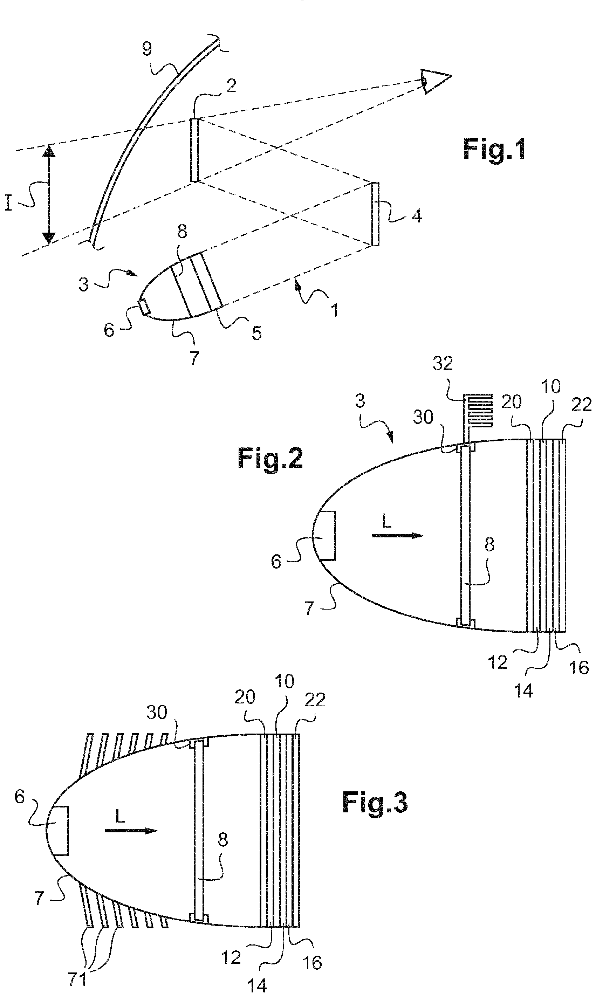

Un afficheur tête haute 1 tel que celui schématiquement représenté en figure 1 équipe un véhicule (par exemple un véhicule automobile) de manière à créer une image virtuelle I dans le champ de vision d'un conducteur du véhicule, de sorte que le conducteur puisse voir cette image virtuelle I et les informations éventuelles qu'elle contient sans avoir à détourner le regard.

À cet effet, l'afficheur 1 comprend une lame partiellement transparente 2 placée dans le champ de vision du conducteur, un dispositif de génération d'images 3 adapté à générer des images et un dispositif de projection 4 d'images adapté à renvoyer, en direction de ladite lame partiellement transparente 2, les images générées par l'unité de génération d'images 3.

Plus précisément, la lame partiellement transparente 2 est ici un combineur 2 dédié à l'afficheur tête haute 1.

Un tel combineur 2 est ici placé entre le pare-brise 9 du véhicule et les yeux du conducteur.

En variante, la lame partiellement transparente pourrait être confondue avec le pare-brise du véhicule. Autrement dit, dans cette variante, c'est le pare-brise du véhicule qui a la fonction de lame partiellement transparente pour l'afficheur tête haute.

Par ailleurs, ici, le dispositif de projection d'images comprend un miroir de repliement 4 agencé de manière à réfléchir les images générées par le dispositif de génération 3 d'images en direction de la lame partiellement transparente 2. Ici, ledit miroir de repliement est un miroir plan.

En variante, le dispositif de projection d'images pourrait comprendre une pluralité de miroirs et/ou d'autres éléments optiques tels qu'une lentille par exemple.

Le dispositif de génération 3 d'images comprend quant à lui au moins une source de lumière 6, un écran 5 rétroéclairé par cette source de lumière 6, un réflecteur 7 et un polariseur 8 (dénommé *"polariseur supplémentaire"* dans la suite).

Le dispositif de génération 3 d'images est à présent décrit plus précisément en référence aux figures 2 et 3.

Les figures 2 et 3 représentent deux modes de réalisation du dispositif de génération 3 d'image, qui diffèrent principalement l'un de l'autre dans la manière de réaliser des moyens d'évacuation de chaleur 32 ; 71 reliés au polariseur supplémentaire 8.

Les éléments identiques ou similaires de ces deux modes de réalisation sont référencés par les mêmes signes de référence et ne seront pas décrits à chaque fois.

Sur ces deux figures, les proportions ne sont pas respectées afin de faire mieux ressortir la constitution de l'écran 5 telle que décrit ci-dessous.

On a par ailleurs schématiquement représenté par la flèche L la transmission de la lumière de la source de lumière 6 vers l'écran 5.

La source de lumière 6 est ici une diode électroluminescente (ou LED pour *"Light Emitting Diode"*) et l'écran 5 est ici un écran à cristaux liquides (ou LCD pour *"Liquid Crystal Display"*)*,* par exemple à transistors en couche mince (ou TFT pour *"Thin-Film Transistor"*)*.* La lumière émise par une telle source de lumière 6 n'est pas polarisée.

L'écran 5 comprend, dans cet ordre dans le sens du trajet de la lumière L (c'est-à-dire de la partie située du côté de la source de lumière 6 au côté situé vers le dispositif de projection 4), les éléments (ou lames) en forme de plaque qui suivent (chaque élément étant en contact avec le ou les éléments voisin(s)) :
- un polariseur d'entrée 20 ;
- une première vitre 12 ;
- une matrice de cristaux liquides 10 ;
- une seconde vitre 14 ;
- une matrice d'éléments colorés 16 ;
- un polariseur de sortie 22.

Le polariseur d'entrée 20 et/ou le polariseur de sortie 22 sont ici des filtres polariseurs par absorption. Le polariseur d'entrée 20 et le polariseur de sortie 22 ont respectivement un premier axe et un second axe perpendiculaires entre eux (dans le cadre de la technologie dite *"normalement éteint*"*,* ou NB pour *"normally black"*)*.* (On rappelle que l'axe d'un polariseur est la direction de polarisation rectiligne du faisceau lumineux après passage à travers le polariseur.)

Ainsi, si aucun élément de la matrice de cristaux liquides 10 n'est actif, le faisceau lumineux entre le polariseur d'entrée 20 et le polariseur de sortie 22 sera polarisé selon le premier axe (axe du polariseur d'entrée 20) et aucune lumière ne sera donc émise en sortie du polariseur de sortie 22.

Par activation adaptée des éléments de la matrice de cristaux liquides 10 (au moyen d'un module de commande non représentée), la polarisation de certaines parties du faisceau lumineux est modifiée au niveau de la matrice de cristaux liquides 10 de sorte que de la lumière est émise en sortie du polariseur de sortie 22 au niveau de régions correspondants auxdites parties du faisceau lumineux.

Pour chaque pixel de l'écran 5, la matrice d'éléments colorés 16 comprend une pluralité d'éléments colorés (ici un élément rouge, un élément vert et un élément bleu) à travers chacun desquels il est possible de faire passer une intensité réglable de lumière par activation adaptée de l'élément correspondant de la matrice à cristaux liquides 10, comme indiqué ci-dessus.

On obtient ainsi une couleur souhaitée pour chaque pixel, par combinaison additive des lumières traversant les différents éléments colorés de ce pixel.

Comme déjà indiqué, le dispositif de formation d'image 3 comprend un polariseur supplémentaire 8 interposé entre la source de lumière 6 et l'écran 5, sur le trajet de la lumière L entre ces deux éléments 5, 6.

Le polariseur supplémentaire 8 est un polariseur par absorption adapté à transmettre sélectivement une composante de la lumière présentant une polarisation du même type que celle de la lumière transmise par le polariseur d'entrée 20. Ainsi, la lumière transmise par le polariseur supplémentaire 8 et incidente sur l'écran 5, et donc sur le polariseur d'entrée 20, est déjà limitée à sa composante transmise par le polariseur d'entrée 20 de sorte que le polariseur d'entrée 20 n'absorbera qu'une proportion très faible (nulle en théorie) de la lumière incidente et ne s'échauffera donc pas.

En pratique, le polariseur supplémentaire 8 est un filtre polariseur ayant un axe identique à celui du polariseur d'entrée 20.

Le polariseur supplémentaire 8 est monté dans le dispositif de formation d'image 3 à distance de l'écran 5 de manière à être disjoint de l'écran 5. Le polariseur supplémentaire 8 et l'écran 5 sont par exemple séparés d'une distance supérieure à 1 millimètre dans la direction du trajet de la lumière L.

Ici, le polariseur supplémentaire 8 est monté dans le réflecteur 7 par des moyens de montage 30 réalisés dans un matériau conducteur de la chaleur (par exemple un métal tel que l'aluminium).

Dans le premier mode de réalisation du dispositif de génération 3 d'image (figure 2), les moyens d'évacuation de chaleur mentionnés précédemment comprennent un radiateur 32, relié au polariseur supplémentaire 8 par l'intermédiaire des moyens de montage 30.Dans le deuxième mode de réalisation du dispositif de génération 3 d'image (figure 3), le réflecteur 7 dans lequel est monté le polariseur supplémentaire 8 est formé d'au moins un matériau conducteur de la chaleur. Ce réflecteur 7 peut par exemple être réalisé en aluminium. On peut aussi prévoir, dans ce deuxième mode de réalisation, de réaliser le réflecteur 7 dans une matière plastique, telle que du polycarbonate, dans laquelle des particules métalliques sont incluses, un revêtement d'aluminium étant alors appliqué sur des faces internes du réflecteur 7 (pour les rendre réfléchissantes).

Dans ce deuxième mode de réalisation, les moyens d'évacuation de chaleur comprennent des ailettes de refroidissement 71 reliées au réflecteur 7. Ces ailettes de refroidissement 71 s'étendent ici à partir de faces externes, latérales, du réflecteur 7. Elles sont formées du matériau conducteur de la chaleur mentionné ci-dessus. On peut prévoir par exemple que ces ailettes de refroidissement 71 sont montées au contact des faces externes du réflecteur 7, ou encore qu'elles viennent de formation avec le réflecteur 7.

Dans une variante (non représentée) de ce deuxième mode de réalisation, les ailettes de refroidissement peuvent être omises, la chaleur générée au sein du polariseur supplémentaire étant alors évacuée soit directement par le réflecteur, soit par d'autres moyens d'évacuations de la chaleur, tels qu'un radiateur additionnel monté en partie arrière du réflecteur, à l'opposé de l'écran.

Les premier et deuxième modes de réalisation décrits ci-dessus peuvent être combinés entre eux. En particulier, les moyens d'évacuation de chaleur peuvent comprendre non seulement le radiateur relié aux moyens de montage du polariseur supplémentaire, mais aussi les ailettes de refroidissement susmentionnées.

Grâce à ces moyens d'évacuation de chaleur 32 ; 71, la chaleur générée au sein du polariseur supplémentaire 8 (du fait de l'absorption de la composante de la lumière L qui n'est pas transmise à l'écran 5) est ainsi évacuée à distance de l'écran 5.

Grâce à l'utilisation du polariseur supplémentaire 8, on réduit l'échauffement de l'écran 5, ce qui est souhaitable pour son fonctionnement. Par ailleurs, les sources de chaleur sont mieux réparties au sein du dispositif de génération d'image 3 puisque l'absorption d'une composante de la lumière (dans le polariseur supplémentaire 8) est réalisée à distance de l'absorption de l'autre composante de la lumière (au niveau du polariseur de sortie 22, en particulier lorsque l'écran 5 est noir ou sombre).

## Revendications

1. Dispositif de génération d'image (3) comprenant un écran à cristaux liquides (5) et une source de lumière (6) associée optiquement à l'écran à cristaux liquides (5) pour éclairer ledit écran (5), l'écran à cristaux liquides (5) comportant un polariseur d'entrée (20) adapté à transmettre sélectivement une composante de la lumière présentant une polarisation donnée,
le dispositif de génération d'image comprenant un polariseur supplémentaire (8), interposé sur le trajet de la lumière entre la source de lumière (6) et l'écran à cristaux liquides (5), ce polariseur supplémentaire (8) étant adapté à transmettre ladite composante de la lumière présentant ladite polarisation donnée et à absorber une composante de la lumière présentant une polarisation différente de ladite polarisation donnée et le dispositif de génération d'image comprenant un réflecteur (7) disposé de manière à réfléchir vers l'écran (5) une partie de la lumière émise par la source de lumière (6), **caractérisé en ce que** le polariseur supplémentaire (8) étant monté dans le réflecteur, et
**en ce que** le polariseur supplémentaire (8) est relié à des moyens d'évacuation de chaleur qui comprennent un radiateur (32) relié au polariseur supplémentaire (8) par l'intermédiaire des moyens de montage (30).

2. Dispositif de génération d'image selon la revendication 1, dans lequel ladite polarisation donnée est une polarisation rectiligne.

3. Dispositif de génération d'image selon la revendication 1 ou 2, dans lequel le polariseur d'entrée (20) est un filtre polariseur ayant un axe donné et le polariseur supplémentaire (8) est un filtre polariseur ayant ledit axe donné.

4. Dispositif de génération d'image selon l'une des revendications 1 à 3, dans lequel l'écran à cristaux liquides comprend en outre un polariseur de sortie (22) et une matrice de cristaux liquides (10) interposée entre le polariseur d'entrée (20) et le polariseur de sortie (22).

5. Dispositif de génération d'image selon l'une des revendications 1 à 4, dans lequel le polariseur supplémentaire (8) est disjoint de l'écran à cristaux liquides (5).

6. Dispositif de génération d'image selon l'une des revendications 1 à 5, dans lequel le polariseur supplémentaire (8) est relié thermiquement audit réflecteur (7), et dans lequel ledit réflecteur est formé d'au moins un matériau conducteur de la chaleur.

7. Dispositif de génération d'image selon l'une des revendications 1 à 6, dans lequel lesdits moyens d'évacuation de chaleur comprennent des ailettes de refroidissement (71) reliées au réflecteur (7).

8. Dispositif de génération d'image selon l'une des revendications 1 à 7, dans lequel la lumière émise par la source de lumière (6) est non-polarisée.

9. Dispositif de génération d'image selon l'une des revendications 1 à 8, dans lequel la source de lumière (6) comprend au moins une diode électroluminescente.

10. Afficheur tête haute (1) pour véhicule comprenant un dispositif de génération d'image (3) selon l'une des revendications 1 à 9 adapté à générer au moins une image et un dispositif de projection (4) adapté à renvoyer ladite image en direction d'une lame partiellement transparente (2 ; 9).

## Patentansprüche

1. Vorrichtung zur Bilderzeugung (3), beinhaltend einen Flüssigkristallbildbildschirm (5) und eine Lichtquelle (6), die mit dem Flüssigkristallbildschirm (5) optisch assoziiert ist, um den Bildschirm (5) zu beleuchten, wobei der Flüssigkristallbildschirm (5) einen Eintrittspolarisator (20) umfasst, der dazu angepasst ist, eine Komponente des Lichts, die eine gegebene Polarisation aufweist, selektiv zu übertragen, wobei die Bilderzeugungsvorrichtung einen zusätzlichen Polarisator (8) beinhaltet, der zwischen der Lichtquelle (6) und dem Flüssigkristallbildschirm (5) in den Weg des Lichts eingefügt ist, wobei dieser zusätzliche Polarisator (8) dazu angepasst ist, die Komponente des Lichts, die die gegebene Polarisation aufweist, zu übertragen und eine Komponente des Lichts, die eine von der gegebenen Polarisation verschiedene Polarisation aufweist, zu absorbieren, und wobei die Bilderzeugungsvorrichtung einen Reflektor (7) beinhaltet, der so angeordnet ist, dass er einen Teil des durch die Lichtquelle (6) emittierten Lichts zu dem Bildschirm (5) reflektiert, **dadurch gekennzeichnet, dass** der zusätzliche Polarisator (8) in dem Reflektor angebracht ist und dass der zusätzliche Polarisator (8) mit Wärmeabführmitteln verbunden ist, die einen Kühlkörper (32) beinhalten, der mit Hilfe von Montagemitteln (30) mit dem zusätzlichen Polarisator (8) verbunden ist.

2. Bilderzeugungsvorrichtung nach Anspruch 1, wobei die gegebene Polarisation eine geradlinige Polarisation ist.

3. Bilderzeugungsvorrichtung nach Anspruch 1 oder 2, wobei der Eintrittspolarisator (20) ein Polarisationsfilter ist, das eine gegebene Achse aufweist, und der zusätzliche Polarisator (8) ein Polarisationsfilter ist, das die gegebene Achse aufweist.

4. Bilderzeugungsvorrichtung nach einem der Ansprüche 1 bis 3, wobei der Flüssigkristallbildschirm ferner einen Austrittspolarisator (22) und eine Flüssigkristallmatrix (10), die zwischen den Eintrittspolarisator (20) und den Austrittspolarisator (22) eingefügt ist, beinhaltet.

5. Bilderzeugungsvorrichtung nach einem der Ansprüche 1 bis 4, wobei der zusätzliche Polarisator (8) von dem Flüssigkristallbildschirm (5) getrennt ist.

6. Bilderzeugungsvorrichtung nach einem der Ansprüche 1 bis 5, wobei der zusätzliche Polarisator (8) mit dem Reflektor (7) thermisch verbunden ist und wobei der Reflektor aus mindestens einem wärmeleitfähigen Material gebildet ist.

7. Bilderzeugungsvorrichtung nach einem der Ansprüche 1 bis 6, wobei die Wärmeabführmittel Kühlrippen (71) beinhalten, die mit dem Reflektor (7) verbunden sind.

8. Bilderzeugungsvorrichtung nach einem der Ansprüche 1 bis 7, wobei das durch die Lichtquelle (6) emittierte Licht unpolarisiert ist.

9. Bilderzeugungsvorrichtung nach einem der Ansprüche 1 bis 8, wobei die Lichtquelle (6) mindestens eine Leuchtdiode beinhaltet.

10. Head-up-Display (1) für ein Fahrzeug, beinhaltend eine Bilderzeugungsvorrichtung (3) nach einem der Ansprüche 1 bis 9, die dazu angepasst ist, mindestens ein Bild zu erzeugen, und eine Projektionsvorrichtung (4), die dazu angepasst ist, das Bild in Richtung einer teilweise transparenten Scheibe (2; 9) weiterzuleiten.

## Claims

1. Image generation device (3) comprising a liquid-crystal display screen (5) and a light source (6) optically associated with the liquid-crystal display screen (5) for illuminating said screen (5), the liquid-crystal display screen (5) comprising an input polarizer (20) designed to selectively transmit a light component having a given polarization,
the image generation device comprising an additional polarizer (8) interposed on the light path between the light source (6) and the liquid-crystal display screen (5), this additional polarizer (8) being designed to transmit said light component having said given polarization and to absorb a light component having a polarization different from said given polarization and the image generation device comprising a reflector (7) arranged so as to reflect a portion of the light emitted by the light source (6) towards the screen (5), **characterized in that** the additional polarizer (8) is mounted in the reflector, and **in that** the additional polarizer (8) is connected to heat removal means that comprise a radiator (32) connected to the additional polarizer (8) via mounting means (30).

2. Image generation device according to Claim 1, wherein said given polarization is a rectilinear polarization.

3. Image generation device according to Claim 1 or 2, wherein the input polarizer (20) is a polarizer filter having a given axis and the additional polarizer (8) is a polarizer filter having said given axis.

4. Image generation device according to one of Claims 1 to 3, wherein the liquid-crystal display screen furthermore comprises an output polarizer (22) and a liquid-crystal matrix (10) interposed between the input polarizer (20) and the output polarizer (22).

5. Image generation device according to one of Claims 1 to 4, wherein the additional polarizer (8) is separate from the liquid-crystal display screen (5).

6. Image generation device according to one of Claims 1 to 5, wherein the additional polarizer (8) is thermally connected to said reflector (7), and wherein said reflector is formed of at least one thermally conductive material.

7. Image generation device according to one of Claims 1 to 6, wherein said heat removal means comprise cooling fins (71) connected to the reflector (7).

8. Image generation device according to one of Claims 1 to 7, wherein the light emitted by the light source (6) is unpolarized.

9. Image generation device according to one of Claims 1 to 8, wherein the light source (6) comprises at least one light-emitting diode.

10. Head-up display (1) for a vehicle comprising an image generation device (3) according to one of Claims 1 to 9 designed to generate at least one image and a projection device (4) designed to return said image in the direction of a partially transparent plate (2; 9).
